Europäisches Patentamt

European Patent Office

Office européen des brevets

(11) Veröffentlichungsnummer: **0 157 165**
A1

# EUROPÄISCHE PATENTANMELDUNG

(21) Anmeldenummer: 85102096.6

(22) Anmeldetag: 26.02.85

(51) Int. Cl.⁴: **G 10 L 5/06**, G 06 F 15/336

(30) Priorität: 01.03.84 DE 3407644

(43) Veröffentlichungstag der Anmeldung: 09.10.85
**Patentblatt 85/41**

(84) Benannte Vertragsstaaten: **AT DE FR GB IT SE**

(71) Anmelder: **Siemens Aktiengesellschaft, Berlin und München Wittelsbacherplatz 2, D-8000 München 2 (DE)**

(72) Erfinder: **Luchner, Stefan, Kerschensteinerstrasse 137, D-8034 Germering (DE)**
Erfinder: **Lagger, Helmut, Dr., Putzbrunner Strasse 79, D-8012 Ottobrunn (DE)**

(54) Verfahren zur Bewertung der Ähnlichkeit jeweils zweier digital dargestellter Zahlenfolgen, insbesondere Funktionskurven.

(57) Ein Verfahren zur Bewertung der Ähnlichkeit jeweils zweier digital dargestellter Zahlenfolgen, insbesondere Funktionskurven, bei dem jeweils Bestandteile oder Bitgruppen (AKF) zweier Binärwörter (A, B) mittels Schwellwerten in Beziehung zueinander gesetzt werden, um Distanzwerte (di) zu bilden, aus denen eine Ähnlichkeitsbewertungsgröße ableitbar ist. Zur Durchführung des Verfahrens ist eine kaskadierte Anordnung von PROMs ($P_1 \ldots P_{16}$; $P_I \ldots P_{IV}$; $P_{17}$) und Addieren ($ADD_1$, $ADD_2$) vorgesehen.

EP 0 157 165 A1

0157165

SIEMENS AKTIENGESELLSCHAFT
Berlin und München

Unser Zeichen:
84 P 1189 E

Verfahren zur Bewertung der Ähnlichkeit jeweils zweier
digital dargestellter Zahlenfolgen, insbesondere
Funktionskurven

Die vorliegende Erfindung betrifft ein Verfahren zur Bewertung der Ähnlichkeit jeweils zweier digital dargestellter Zahlenfolgen, insbesondere Funktionskurven, insbesondere solcher Funktionskurven, die Merkmalsvektoren von Sprachsignalen repräsentieren.

Bei der Sprachverarbeitung großer Wortschätze, bei der Speicherung von Sprachmustern sowie bei der schnellen Distanzberechung zwischen Mustervektorenpaaren (Merkmalsvektoren) allgemein ergeben sich aufgrund der auftretenden großen Datenmengen Probleme technischer und organisatorischer Art.

Zur Reduzierung der jeweiligen Datenmenge wurde bisher nach bekannten Verfahren eine sog. Vektorquantisierung vorgenommen. Als Distanz zwischen Merkmalsvektorenpaaren wurde dabei die Summe der Differenzbeträge zwischen korrespondierenden Koeffizienten berechnet. Derartige Verfahren weisen jedoch verschiedene Nachteile auf, beispielsweise den eines verhältnismäßig großen Rechenaufwandes und damit eines großen Zeitaufwandes.

Der vorliegenden Erfindung liegt die Aufgabe zugrunde, ein verbessertes Verfahren der eingangs genannten Art anzugeben.

PAP

Die der vorliegenden Erfindung zugrundeliegende Aufgabe wird
durch ein Verfahren der eingangs genannten Art und gemäß dem
Oberbegriff des Patentanspruchs 1, das durch die in dessen
kennzeichnendem Teil angegebenen Merkmale charakterisiert
ist, gelöst.

Vorteilhafte Weiterbildungen der Erfindung sind durch die in
den Unteransprüchen angegebenen Merkmale gekennzeichnet.

Das erfindungsgemäße Verfahren sieht vor, daß entsprechend
der geforderten Bewertungsschärfe eine Anzahl n von Schwellenzahlenfolgen, insbesondere Schwellenfunktionen, bestimmt
wird, deren in vorbestimmten Abständen über der Abszisse
liegende Werte, beispielsweise über der Zeitachse liegende
Augenblickswerte, mit jeweils entsprechenden, über der Abszisses liegenden Werten der zu bewertenden Zahlenfolgen
korreliert werden. Dabei wird allen jeweils oberhalb der
betreffenden Werte einer Schwellenzahlenfolge liegenden
Werten einer der betreffenden zu bewertenden Zahlenfolgen
jeweils ein bestimmter erster Binärwert, beispielsweise "1",
und allen jeweils unterhalb der jeweils betreffenden Binärwerte der Schwellenzahlenfolge liegenden Werten der Zahlenfolge jeweils der zweite Binärwert, beispielsweise "2",
zugeordnet. Die jeweils zu einer Zahlenfolge gehörenden
zugeordneten Binärwerte werden in Binärwörtern einer vorbestimmten Bitanzahl zusammengefaßt. Dann werden die Binärwörter jeweils eines Paares von Binärwörtern, nämlich das zu
einer Zahlenfolge gehörende Binärwort und das zu der anderen
Zahlenfolge gehörende Binärwort, derart miteinander verknüpft, daß vorzugsweise bitweise eine bestehende Gleichheit
bzw. Ungleichheit zwischen diesen Binärwörtern festzustellen
ist. Daraufhin wird jeweils die Menge der als gleich bzw.
als ungleich festgestellten Stellen der Binärwörter zu einer
Ähnlichkeitsbewertungsgröße verarbeitet, die zur dem betreffenden Anwendungsfall entsprechenden weitergehenden
Verarbeitung einer weiterverarbeitenden Stufe zugeführt
werden können.

Vorzugsweise wird die Anzahl n = 1 gewählt. Die Binärwörter werden in dem Fall, in dem die Anzahl n kleiner oder gleich der Anzahl von Binärstellen der Binärwerte ist, nämlich wenn m gleich oder größer n ist, wobei m die Anzahl der Bits je Binärwert ist, mittels einer einfachen logischen Funktion, beispielsweise einer Exklusiv-ODER-Funktion für den Fall, das n = 1 ist, oder einer komplexeren in einer Tabelle definierten Funktion verknüpft, un einen Betragsabstand zu bestimmen. Bei besserer Ausnutzung der Binärstellen der Binärwerte, nämlich wenn die Beziehung

$$m < n < 2^m - 1$$

gilt, wobei m die Anzahl der Bits je Binärwert ist, werden die Binärwörter mittels Tabellen miteinander in Beziehung gesetzt, wobei die Binärwörter Adressen innerhalb der Tabellen darstellen und die Tabellen entsprechend vorbelegt sind.

Die Anzahl der als gleich bzw. ungleich festgestellten Stellen wird gemäß einer bevorzugten Weiterbildung der vorliegende Erfindung zur Bildung der Ähnlichkeitsbewertungsgröße summiert. Zur Bildung der Ähnlichkeitsbewertungsgröße können jedoch auch die Positionen der als gleich bzw. ungleich festgestellten Stellen herangezogen werden. Es kann sich fallweise auch als zweckmäßig erweisen, zur Bildung der Ähnlichkeitsbewertungsgröße die Anzahl der als gleich bzw. ungleich festgestellten Stellen unter Berücksichtigung ihrer Position zu Teilsummen aufzusummieren.

Es ist vorgesehen, daß die Schwellenzahlenfolgen, insbesondere Schwellenfunktionen, Konstanten sind. Die Schwellenzahlenfolgen können jedoch jeweils Merkmalsvektoren repräsentieren. Eine spezielle Weiterbildung der vorliegenden Erfindung sieht vor, daß die Schwellenfunktionen aus Referenzvektoren ermittelt werden, die in einem sog. Inventarspeicher vergleichbar einem elektronischen Wörterbuch abge-

0157165
84 P 1189 E

legt sind.

Die in einem solchen Inventarspeicher abgelegten Referenzvektoren können beispielsweise in einer sog. Trainingsphase
von der betreffenden Einrichtung ermittelt werden, sie können jedoch auch aus vorgegebenen Funktionen abgeleitet sein.

Die Schwellenzahlenfolgen können beispielsweise aus einem
Vorwissen betreffend eine gegebene Problemstellung ermittelt
werden, sie können jedoch auch für die betreffende Einrichtung vorbestimmt und in dem Inventarspeicher abgelegt sein
oder aus einer Menge eintreffender zu bewertender Signale,
beispielsweise durch eine Mittelwertbildung, bestimmt und
dann abgelegt werden.

Gemäß einer vorteilhaften Weiterbildung der vorliegenden
Erfindung werden die miteinander zu korrelierenden Binärwörter vor den Verknüpfungsvorgängen um zumindest eine
Stelle gegeneinander verschoben, so daß einander nicht entsprechende Stellen miteinander verknüpft werden.

Gemäß einer anderen Weiterbildung der Erfindung ist vorgesehen, daß bei der Verknüpfung der zu korrelierenden Binärwörter außer dem dem betreffenden Binärwert des einen Binärwortes zugeordneten Binärwert des anderen Binärwortes
zusätzlich die diesem jeweils benachbarten Binärwerte einbezogen werden.

Zum Bestimmen von Ähnlichkeitsbewertungsgrößen für die jeweils miteinander zu verknüpfenden Binärwerte werden entsprechend einer vorteilhaften Weiterbildung der vorliegenden
Erfindung verschiedene Verknüpfungsfunktionen durchgeführt,
nämlich beispielsweise eine Exklusiv-ODER-Funktion zur Ermittlung des jeweiligen Betragsabstandes, eine UND-Funktion
zur Ermittlung des Minimums dieser Betragsabstände und eine
ODER-Funktion zur Ermittlung des Maximums dieser Betragsabstände im Falle $n = 1$, und im Falle $n = 2$ ein Auslesen der

0157165
84 P 1189 E

Funktionswerte der Betragsdifferenz, des Maximums und des
Minimums aus vorprogrammierten Tabellen.

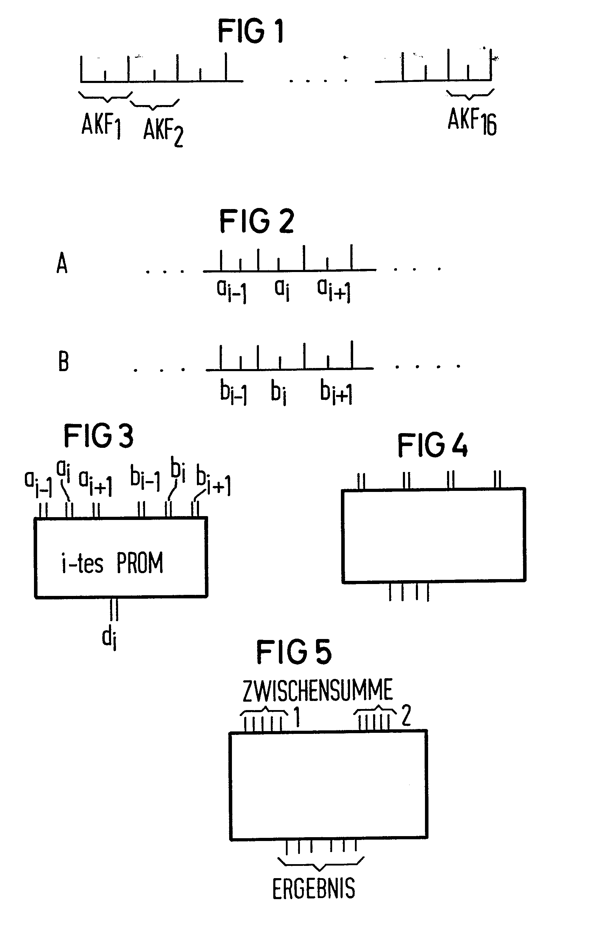

Eine Schaltungsanordnung zur Durchführung des erfindungsgemäßen Verfahrens wird im folgenden anhand von Figuren 1 - 6
erläutert.

Fig. 1 zeigt zunächst den Aufbau der zu vergleichenden Bitkombinationen. Aus der Figur ist als Beispiel ein 32-Bit-
Datenwort dargestellt, das in 16 Bitgruppen AKF zu je zwei
Bits codiert ist. Bekanntlich können mit solchen Bitgruppen
jeweils vier untershiedliche Zustände dargestellt oder erfaßt werden. Je drei Schwellwerte, die für die Definition
dieser zustände maßgeblich sind, können für die verschiedenen Bitgruppen $AKF_i$ (i = 1 ... 16) unterschiedlich sein. Zum
Vergleichen ist die Ähnlichkeit zweier in dieser Art aufgebauter 32-Bit-Datenwörter heranziehbar. Es sein angenommen,
daß die Bitgruppen $AKF_i$ eines Wortes A (an einem A-Bus) mit
$a_i$ und diejenigen eines Wortes B (an einem B-Bus) mit $b_i$
bezeichnet sind, vergl. Fig. 2.

Die Ähnlichkeit der Datenwörter wird mit einem Wert für eine
Distanz ausgedrückt, die sich aus den Teildistanzen

$$d_i = \text{Max} (x_i, y_i)$$

$$x_i = \text{Min} (Ia_i - b_{i-1}I, Ia_i - b_iI, Ia_i - b_{i+1}I)$$

$$y_i = \text{Min} (Ib_i - a_{i-1}I, Ib_i - a_iI, Ib_i - a_{i+1}I)$$

ergibt.

Diese Teildistanzen $d_i$ können nun hardware-mäßig mit 16 4k-
PROMs berechnet werden, wobei die ersten sechs Eingänge
(Adreßleitungen) für die zu 2 Bit codierten Daten $a_{i-1}$, $a_i$,
$a_{i+1}$ verwendet werden und die übrigen sechs Eingänge für die
entsprechenden Daten $b_{i-1}$, $b_i$, $b_{i+1}$. Durch entsprechende

logische Programmierung der PROMs kann die oben genannte Berechnungsvorschrift befolgt werden, und das Ergebnis ist eine Teildistanz mit einer 2-Bit-Größe, vergl. Fig. 3.

Die 16 Teildistanzen $d_i$ werden schließlich aufaddiert. Dies kann mit kaskadierten Addierern, mit programmierten Tabellen (PROMs) oder mit Kombinationen daraus erfolgen. Im vorliegenden Fall werden je vier Teildistanzen mittels eines PROM summiert (256 Eingangswerte), vergl. Fig. 4.

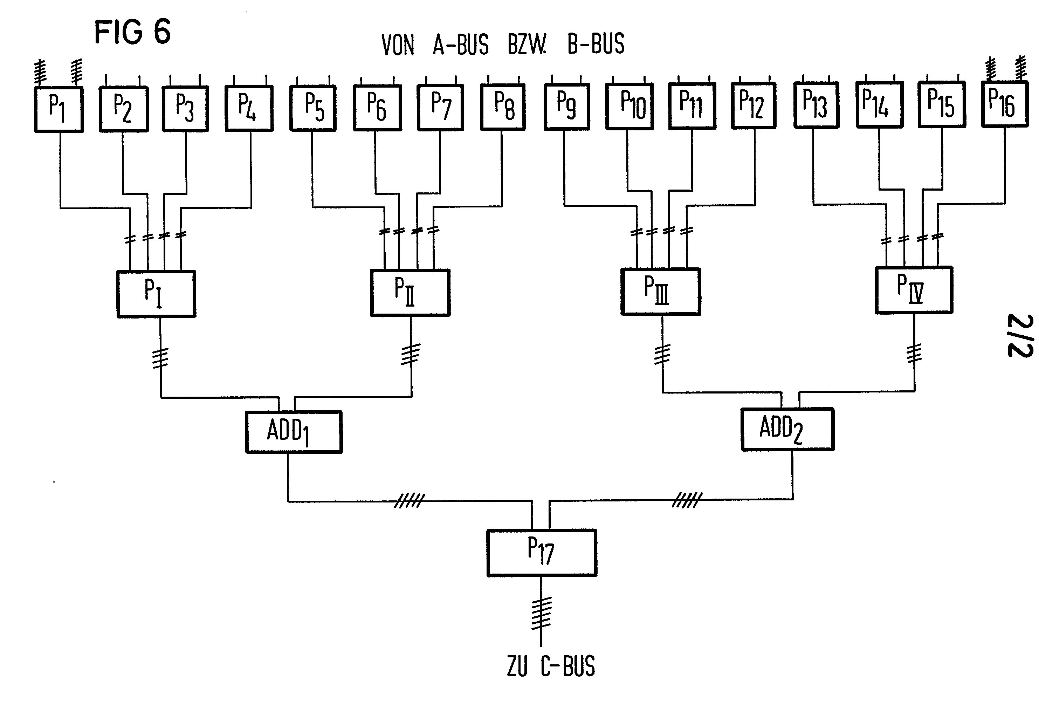

Das Ergebnis ist eine durch vier Bits darstellbare Zwischensumme. Je zwei dieser Zwischensummen werden in einer weiteren Stufe mit einem Addierer zusammengefaßt. Es ergeben sich zwei mit je fünf Bits darstellbare Zwischensummen. Schließlich wird mit einem PROM (4k, zwei Eingänge bleiben frei) aus diesen Zwischenwerten die endgültige Summe (maximal 3 x 16 = 48, welcher Wert mit sechs Bits darstellbar ist) berechnet und auf einen C-Bus ausgegeben, vergl. Fig. 5 u. Fig. 6.

Das erfindungsgemäße Verfahren und die zu dessen Durchführung angegebene Schaltungsanordnung sind nicht auf eine Anwendungsart wie eingangs erläutert beschränkt. Vielmehr können beispielsweise mit dem erfindungsgemäßen Verfahren und der lediglich als Ausführungsbeispiel angegebenen Schaltungsanordnung zu dessen Durchführung ständig Betriebsdaten, beispielsweise eines Kernkraftwerks oder einer großchemischen Anlage, bewertet werden.

17 Patentansprüche
6 Figuren

Patentansprüche

1. Verfahren zur Bewertung der Ähnlichkeit jeweils zweier digital dargestellter Zahlenfolgen, insbesondere Funktionskurven, insbesondere solcher Funktionskurven, die Merkmalsvektoren von Sprachsignalen repräsentieren, d a d u r c h   g e k e n n z e i c h n e t ,   daß entsprechend der geforderten Bewertungsschärfe eine Anzahl n von Schwellenzahlenfolgen, insbesondere Schwellenfunktionen, bestimmt wird, deren in vorbestimmten Abständen über der Abszisse liegende Werte, beispielsweise über der Zeitachse liegende Augenblickswerte, mit jeweils entsprechenden, über der Abszisse liegenden Werten der zu bewertenden Zahlenfolgen korreliert werden, daß allen jeweils oberhalb der betreffenden Werte einer Schwellenzahlenfolge liegenden Werten einer der betreffenden zu bewertenden Zahlenfolge jeweils ein bestimmter erster Binärwert und allen jeweils unterhalb der jeweils betreffenden Binärwerte der Schwellenzahlenfolge liegenden Werten der Zahlenfolge jeweils der zweite Binärwert zugeordnet wird, daß die jeweils zu einer Zahlenfolge gehörenden zugeordneten Binärwerte in Binärwörtern einer vorbestimmten Bitanzahl zusammengefaßt werden, daß die Binärwörter jeweils eines Paares von Binärwörtern, nämlich das zu einer Zahlenfolge gehörende Binärwort und das zu der anderen Zahlenfolge gehörende Binärwort, derart miteinander verknüpft werden, daß vorzugsweise bitweise eine bestehende Gleichheit bzw. Ungleichheit zwischen diesen Binärwörtern festzustellen ist, und daß die Menge der als gleich bzw. als ungleich festgestellten Stellen der Binärwörter zu einer Ähnlichkeitsbewertungsgröße verarbeitet wird, die einer weiterverarbeitenden Stufe zuzuführen ist.

2. Verfahren nach Anspruch 1, d a d u r c h   g e -
k e n n z e i c h n e t ,   daß n = 1 ist.

3. Verfahren nach Anspruch 1, d a d u r c h   g e -

k e n n z e i c h n e t ,  daß die Binärwörter in dem
Fall, in dem n kleiner/gleich der Anzahl von Binärstellen
der Binärwerte ist, nämlich wenn m $\geq$ n ist, wobei m die
Anzahl der Bits je Binärwert ist, mittels einer einfachen
logischen Funktion, beispielsweise einer Exklusiv-ODER-
Funktion für den Fall, daß n = 1 ist, oder einer komplexeren in einer Tabelle definierten Funktion verknüpft
werden, um einen Betragsabstand zu bestimmen.

4. Verfahren nach Anspruch 1,  d a d u r c h  g e -
k e n n z e i c h n e t ,  daß bei besserer Ausnutzung
der Binärstellen der Binärwerte, nämlich wenn die Beziehung

$$m < n \leq 2^m - 1$$

gilt, wobei m die Anzahl der Bits je Binärwert ist, die
Binärwörter mittels Tabellen miteinander in Beziehung gesetzt werden, wobei die Binärwörter Adressen innerhalb
der Tabellen darstellen und die Tabellen entsprechend
vorbelegt sind.

5. Verfahren nach Anspruch 1,  d a d u r c h  g e -
k e n n z e i c h n e t ,  daß die Anzahl der als gleich
bzw. ungleich festgestellten Stellen zur Bildung der Ähnlichkeitsbwertungsgröße summiert wird.

6. Verfahren nach Anspruch 1,  d a d u r c h  g e -
k e n n z e i c h n e t ,  daß die Positionen der als
gleich bzw. ungleich festgestellten Stellen zur Bildung
der Ähnlichkeitsbewertungsgröße herangezogen werden.

7. Verfahren nach Anspruch 1,  d a d u r c h  g e -
k e n n z e i c h n e t ,  daß zur Bildung der Ähnlichkeitsbewertungsgröße die Anzahl der als gleich bzw. ungleich festgestellten Stellen unter Berücksichtigung
ihrer Position zu Teilsummen aufsummiert werden.

8. Verfahren nach Anspruch 1, d a d u r c h    g e -
k e n n z e i c h n e t ,  daß die Schwellenzahlenfolgen,
insbesondere Schwellenfunktionen, konstanter sind.

9. Verfahren nach Anspruch 1, d a d u r c h    g e -
k e n n z e i c h n e t ,  daß die Schwellenfunktionen
jeweils Merkmalsvektoren repräsentieren.

10. Verfahren nach Anspruch 1, d a d u r c h    g e -
k e n n z e i c h n e t ,  daß die Schwellenfunktionen
aus Referenzvektoren, die in einem Inventarspeicher abgelegt sind, ermittelt werden.

11. Verfahren nach Anspruch 10, d a d u r c h    g e -
k e n n z e i c h n e t ,  daß die Referenzvektoren in
einer sogenannten Trainingsphase von der betreffenden
Einrichtung ermittelt werden.

12. Verfahren nach Anspruch 1, d a d u r c h    g e -
k e n n z e i c h n e t ,  daß die Schwellenzahlenfolgen
aus einem Vorwissen zu der gegebenen Problemstellung ermittelt werden.

13. Verfahren nach Anspruch 1, d a d u r c h    g e -
k e n n z e i c h n e t ,  daß die Schwellenzahlenfolgen
für die betreffende Einrichtung vorbestimmt und in dem
Inventarspeicher fest abgelegt sind.

14. Verfahren nach Anspruch 1, d a d u r c h    g e -
k e n n z e i c h n e t ,  daß die Schwellenzahlenfolgen
aus einer Menge eintreffender zu bewertender Signale,
beispielsweise durch Mittelwertbildung, bestimmt werden.

15. Verfahren nach Anspruch 1, d a d u r c h    g e -
k e n n z e i c h n e t ,  daß die miteinander zu korrelierenden Binärwörter vor den Verknüpfungsvorgängen um
zumindest eine Stelle gegeneinander verschoben werden, so daß einander nicht entsprechende Stellen miteinander verknüpft werden.

16. Verfahren nach Anspruch 1 oder 15, d a d u r c h
g e k e n n z e i c h n e t , daß bei der Verknüpfung
der zu korrelierenden Binärwörter außer dem dem betreffenden Binärwert des einen Binärwortes zugeordneten Binärwert des anderen Binärwortes zusätzlich die diesem jeweils benachbarten Binärwerte einbezogen werden.

17. Verfahren nach Anspruch 3 oder 4 und 16, d a -
d u r c h g e k e n n z e i c h n e t , daß zum Bestimmen von Ähnlichkeitsbewertungsgrößen für die jeweils
miteinander zu verknüpfenden Binärwerte verschiedene Verknüpfungsfunktionen durchgeführt werden, nämlich beispielsweise eine Exklusiv-ODER-Funktion zur Ermittlung
des jeweiligen Betragsabstandes, eine UND-Funktion zur
Ermittlung des Minimums dieser Betragsabstände und eine
ODER-Funktion zur Ermittlung des Maximums dieser Betragsabstände im Falle $n = 1$ und im Falle $n = 2$ Auslesen der
Funktionswerte der Betragsdifferenz, des Maximums und des
Minimums aus vorprogrammierten Tabellen.

0157165

1/2

## FIG 1

AKF$_1$ AKF$_2$ ... AKF$_{16}$

## FIG 2

A ... $a_{i-1}$ $a_i$ $a_{i+1}$ ...

B ... $b_{i-1}$ $b_i$ $b_{i+1}$ ...

## FIG 3

$a_{i-1}$ $a_i$ $a_{i+1}$ $b_{i-1}$ $b_i$ $b_{i+1}$

i-tes PROM

$d_i$

## FIG 4

## FIG 5

ZWISCHENSUMME
1   2

ERGEBNIS

FIG 6

0157165

2/2

VON A-BUS BZW. B-BUS

ZU C-BUS

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ICASSP 83, PROCEEDINGS OF THE IEEE INTERNATIONAL CONFERENCE ON ACOUSTICS, SPEECH AND SIGNAL PROCESSING, Band 2, 14.-16. April 1983, Boston, Massachusetts, US, Seiten 753-756, IEEE, New York, US; P.K. RAJASEKARAN et al.: "Microcomputer implementable low cost speaker-independent word recognition" * Seiten 754-756: "Appendix A: Algorithm details" * --- | 1 | G 10 L 5/06 G 06 F 15/336 |
| A | PROCEEDINGS OF THE INSTITUTION OF ELECTRICAL ENGINEERS, Band 112, Nr. 11, November 1965, Seiten 2060-2066, Stevenage, GB; W. BEZDEL et al.: "Results of an analysis and recognition of vowels by computer using zero-crossing data" * Absätze 3,4; Figur 1 * --- | 1,2,8 | |
| | | | RECHERCHIERTE SACHGEBIETE (Int. Cl.4) |
| A | FR-A-2 321 739 (N.V. PHILIPS' GLOEILAMPENFABRIEKEN) * Ansprüche 1,2 * --- -/- | 1,13 | G 10 L 5/06 G 06 F 15/336 |

Der vorliegende Recherchenbericht wurde für alle Patentansprüche erstellt.

| Recherchenort DEN HAAG | Abschlußdatum der Recherche 31-05-1985 | Prüfer ARMSPACH J.F.A.M. |
|---|---|---|

Europäisches
Patentamt

**EUROPÄISCHER RECHERCHENBERICHT**

0157165

Nummer der Anmeldung

EP 85 10 2096

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PROCEEDINGS OF THE IEEE COMPUTER SOCIETY CONFERENCE ON PATTERN RECOGNITION AND IMAGE PROCESSING, 31. Mai - 2. Juni 1978, Chicago, Illinois, US, Seiten 514-516, IEEE, New York, US; J.W. GLENN: "Template estimation for word recognition" * Seite 514 * | 1,5 | |
| A | ALTA FREQUENZA, Band 37, Nr. 2, Februar 1968, Seiten 158-163, Mailand, IT; L. GILLI et al.: "A recognition system using majority gates and sequential circuits" * Seiten 158-160: "The structure of the system", "Combinational blocks" * | 1,5-7 | |
| | --- | | RECHERCHIERTE SACHGEBIETE (Int. Cl.4) |
| A | JOURNAL OF THE ACOUSTICAL SOCIETY OF AMERICA, Band 68, Nr. 5, November 1980, Seiten 1271-1276, Acoustical Society of America, New York, US; L.R. RABINER et al.: "A simplified, robust training procedurem for speaker trained, isolated word recognition systems" * Seiten 1271,1272: "Introduction" * | 10-14 | |

--- -/-

Der vorliegende Recherchenbericht wurde für alle Patentansprüche erstellt.

| Recherchenort DEN HAAG | Abschlußdatum der Recherche 31-05-1985 | Prüfer ARMSPACH J.F.A.M. |
|---|---|---|

**Europäisches Patentamt**

**EUROPÄISCHER RECHERCHENBERICHT**

0157165

Nummer der Anmeldung

EP 85 10 2096

Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | NACHRICHTENTECHNISCHE ZEITSCHRIFT N.T.Z., Band 27, Nr. 6, 1974, Seiten 230-232, Berlin, DE; H. KATTERFELDT et al.: "Ein sprecheradaptives Klassifikationsverfahren zur Spracherkennung"<br>* Figur 1 * | 10-14 | |
| A | AUTOMATISME, Band 22, Nr. 10/11, Oktober/November 1977, Seiten 284-292, Paris, FR; C. BERGER-VACHON et al.: "Principes d'élaboration du dictionnaire utilisé dans une méthode de reconnaissance séquentielle de la parole"<br>* Figur 5 * | 15,16 | |
| A | IEEE TRANSACTIONS ON ACOUSTICS, SPEECH, AND SIGNAL PROCESSING, Band ASSP-23, Nr. 1, Februar 1975, Seiten 118-123, New York, US; J.W. KLOVSTAD et al.: "The CASPERS linguistic analysis system"<br>* Figur 8 * | 15,16 | RECHERCHIERTE SACHGEBIETE (Int. Cl.4) |
| A | EDN MAGAZINE, Band 26, Nr. 10, Mai 1981, Seiten 133-143, Boston, US; W. BUCKLEN et al.: "Digital correlators illustrate DSP trends"<br>* Figuren 2-3; Seite 134, linke Spalte, Zeilen 36-45 * | 3,5-7 | |

--- -/-

Der vorliegende Recherchenbericht wurde für alle Patentansprüche erstellt.

| Recherchenort<br>DEN HAAG | Abschlußdatum der Recherche<br>31-05-1985 | Prüfer<br>ARMSPACH J.F.A.M. |
|---|---|---|

Europäisches
Patentamt

**EUROPÄISCHER RECHERCHENBERICHT**

0.157.165
Nummer der Anmeldung

EP 85 10 2096

Seite 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PROCEDINGS OF THE NATIONAL ELECTRONIC CONFERENCE, Band 35, 1981, Seiten 405-409, Oak Brook, US; J.A. ELDON: "High resolution digital correlation" * Absätze 2.1, 2.2 * | 3-5 | |
| A | US-A-3 796 868 (P.P. KAUL et al.) * Zusammenfassung; Figur 1. * | 3,5 | |
| A | 1978 IEEE INTERNATIONAL SYMPOSIUM ON CIRCUITS AND SYSTEMS PROCEEDINGS, 17.-19. Mai 1978, New York, US, Seiten 237-241, IEEE, New York, US; K.W. CURRENT et al.: "Digital correlator design with four-valued threshold logic" * Figuren 1-3 * | 3,5 | |

RECHERCHIERTE
SACHGEBIETE (Int. Cl.4)

Der vorliegende Recherchenbericht wurde für alle Patentansprüche erstellt.

| Recherchenort DEN HAAG | Abschlußdatum der Recherche 31-05-1985 | Prüfer ARMSPACH J.F.A.M. |
|---|---|---|